# EUROPÄISCHE PATENTANMELDUNG

(11) **EP 0 599 018 A1**
(43) Veröffentlichungstag der Anmeldung: **01.06.1994**
(21) Anmeldenummer: 93115525.3
(22) Anmeldetag: 25.09.1993
(51) Int. Cl.: F16L 29/00, F16L 37/30

(54) **Stellmechanismus für den mit einem Füllstutzen zusammenwirkenden Anschlussadapter einer Rohrkupplung**

(30) Priorität: 24.11.1992 CH 3595/92
(71) Anmelder: Mock, Bruno Armin, CH-6052 Hergiswil NW (CH)
(72) Erfinder: Mock, Bruno Armin, CH-6052 Hergiswil NW (CH)
(74) Vertreter: Petschner, Goetz

(57) **Zusammenfassung**

Der Stellmechanismus für den mit einem Füllstutzen (1) zusammenwirkenden Anschlussadapter (2) einer Rohrkupplung insbesondere zum Warten von Kältemittelanlagen o. dgl., umfasst eine, über einen Drehgriff (3) axial verstellbare, einen, mit einem unter der Wirkung einer Druckfeder (4) stehenden Ventilsitz (5) zusammenwirkenden Ventilkörper (6) tragende Ventilstange (7). Hierbei ist die, den Ventilkörper (6) tragende Ventilstange (7) über eine, ein Verdrehen der Ventilstange (7) wenigstens teilweise verhindernde Kupplung (8) mit dem Drehgriff (3) resp. dessen Spindel (9) verbunden.

## Beschreibung

Die vorliegende Erfindung betrifft einen Stellmechanismus für den mit einem Füllstutzen zusammenwirkenden Anschlussadapter einer Rohrkupplung insbesondere zum Warten von Kältemittelanlagen o. dgl., mit einer, über einen Drehgriff axial verstellbaren, einen, mit einem unter der Wirkung einer Druckfeder stehenden Ventilsitz zusammenwirkenden Ventilkörper tragenden Ventilstange.

Rohrkupplungen der vorgenannten Art werden vorzugsweise zum Füllen und Entleeren des Kältemittelkreises von Kältemittelanlagen verwendet. Hierfür werden Füllstutzen und Anschlussadapter miteinander verbunden, wobei das selbstschliessende Ventil des Füllstutzens geöffnet wird. Der Fluss des Kältemittels durch den Anschlussadapter erfolgt dann durch manuelles Betätigen des Adapterventils.

Ein wesentliches Problem bei solchen bekannten Rohrkupplungen besteht nun aber am axial verstellbaren, unter hohem Schliessfederdruck stehenden Adapterventil, indem durch die Verdrehung der als Spindel wirksamen Ventilstange zur axialen Verschiebung des Ventilkörpers relativ zum Ventilsitz zwischen Ventilkörper und Ventilsitz hohe Umfangskräfte wirksam sind, die die Ventildichtung schnell zerstören, so dass der Anschlussadapter nach wenigem Gebrauch in kritischem Masse undicht wird.

Aufgabe der vorliegenden Erfindung ist deshalb die Schaffung eines Stellmechanismus für solche Anschlussadapter, welcher die vorgenannten Nachteile der bekannten Ausführungsformen vollständig beseitigt.

Dies wird erfindungsgemäss dadurch erreicht, dass die, den Ventilkörper tragende Ventilstange über eine, ein Verdrehen der Ventilstange wenigstens teilweise verhindernde Kupplung mit dem Drehgriff resp. dessen Spindel verbunden ist.

Durch diese Massnahmen findet nunmehr bei der Betätigung der Drehgriffspindel eine axiale Relativbewegung zwischen Ventilkörper und Ventilsitz statt ohne jede umfänglich wirksame Kraftkomponente, so dass an der Ventildichtung keinerlei Abnützungen auftreten können.

Eine einfache, wartungsfreie und betriebssichere Ausgestaltung des Stellmechanismus kann dann darin gesehen werden, wenn die Kupplung eine Kugellagerverbindung zwischen Ventilstange und Drehgriffspindel ist. Zusätzlich kann dann die Ausgestaltung weiter so sein, dass zwischen der Ventilstange und dem Gehäuse des Anschlussadapters eine Verdrehsicherung mit Nocken und axialer Nut wirksam ist.

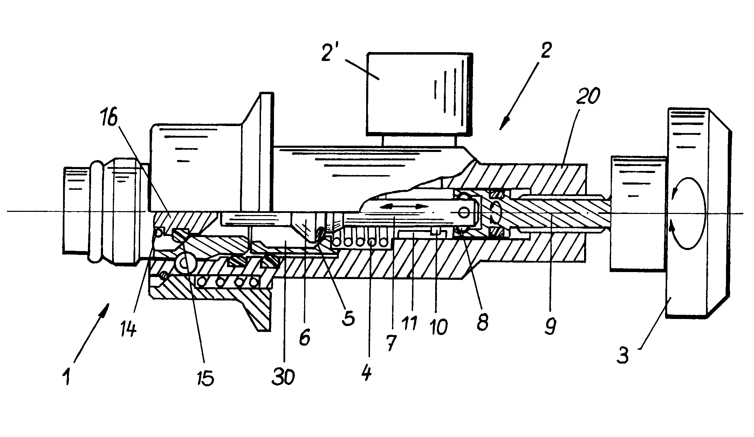

Eine beispielsweise Ausführungsform des Erfindungsgegenstandes ist nachfolgend anhand der Zeichnung, welche eine Rohrkupplung mit Füllstutzen und Anschlussadapter in Seitenansicht, teilweise im Schnitt, zeigt, näher erläutert.

Die Rohrkupplung gemäss der Darstellung umfasst hier einen Füllstutzen 1, der in nicht näher gezeigten Weise an einem Teil eines Kältemittelkreises, etwa Leitung, Reservoir o. dgl. fest angeordnet ist. An diesem Füllstutzen 1 ist ein sogenannter Anschlussadapter 2 ankuppelbar, der über einen Leitungsstutzen 2' und über einen nicht näher gezeigten Schlauch mit einem, das Kältemittel enthaltenden Druckbehälter (nicht gezeigt) in Strömungsverbindung steht. Bei dieser bekannten Anordnung befinden sich im koaxialen Strömungsweg 30 im Gehäuse 20 des Adapters 2 resp. im Füllstutzen 1 selbstschliessende Ventilmittel 5,6 resp. 15,16, die in bekannter Weise unter der Wirkung von Federmittel 4 resp. 14 stehen, und welche bewirken, dass beim Trennen von Adapter und Füllstutzen deren Ventile sofort schliessen.

In bekannter Weise ist zudem das Ventil 5,6 des Anschlussadapters von Hand betätigbar. Hierfür durchdringt die freie Stirnseite des Adaptergehäuses 20 eine mit einem Drehgriff 3 versehene Gewindespindel 9, welche eine axiale Verschiebung des Ventilkörpers 6 bewirkt.

Erfindungsgemäss ist nun die, den Ventilkörper 6 tragende Ventilstange 7 über eine, ein Verdrehen der Ventilstange 7 und damit des Ventilkörpers 6 verhindernde Kupplung 8 mit dem Drehgriff 3 resp. der Gewindespindel 9 verbunden.

Diese Kupplung ist hier vorzugsweise eine Kugellagerverbindung 8 zwischen Ventilstange 7 und Drehgriffspindel 9.

Ansich genügt nun der Kupplungsdruck zwischen den beiden Ventilkörpern 16 und 6, um jede Verdrehung des Ventilkörpers 6 beim Betätigen der Gewindespindel 9 zu verhindern, wenigstens solange, bis der Ventilkörper 6 von seinem Ventilsitz 5 abgehoben hat.

Eine erhöhte Verdrehsicherung kann aber auch erreicht werden, wenn zwischen der Ventilstange 7 und dem Gehäuse 20 des Anschlussadapters 2 eine Verdrehsicherung mit Nocken 10 und axialer Nut 11 wirksam ist.

Aus dem Vorstehenden ergibt sich somit eine Rohrkupplung, bei der nunmehr bei einer Betätigung der Drehgriffspindel eine axiale Relativbewegung zwischen Ventilkörper und Ventilsitz stattfinden kann ohne jede umfänglich wirksame Kraftkomponente, so dass an der Ventildichtung keinerlei Abnützungen auftreten können.

## Patentansprüche

1. Stellmechanismus für den mit einem Füllstutzen zusammenwirkenden Anschlussadapter einer Rohrkupplung insbesondere zum Warten von Kältemittelanlagen o. dgl., mit einer, über einen Drehgriff axial verstellbaren, einen, mit einem unter der Wirkung einer Druckfeder stehenden Ventilsitz zusammenwirkenden Ventilkörper tragenden Ventilstange, dadurch gekennzeichnet, dass die, den Ventilkörper (6) tragende Ventilstange (7) über eine, ein Verdrehen der Ventilstange (7) wenigstens teilweise verhindernde Kupplung (8) mit dem Drehgriff (3) resp. dessen Spindel (9) verbunden ist.

2. Stellmechanismus nach Anspruch 1, dadurch gekennzeichnet, dass die Kupplung eine Kugellagerverbindung (8) zwischen Ventilstange (7) und Drehgriffspindel (9) ist.

3. Stellmechanismus nach Anspruch 1, dadurch gekennzeichnet, dass zwischen der Ventilstange (7) und dem Gehäuse (20) des Anschlussadapters (2) eine Verdrehsicherung mit Nocken (10) und axialer Nut (11) wirksam ist.
